Europäisches Patentamt

European Patent Office

Office européen des brevets

(11) Publication number: **0 203 782**
**B1**

## EUROPEAN PATENT SPECIFICATION

(45) Date of publication of patent specification: **26.09.90**

(21) Application number: **86303899.8**

(22) Date of filing: **22.05.86**

(51) Int. Cl.⁵: **G 05 D 11/02**

(54) Method of and apparatus for dosing a material.

(30) Priority: **31.05.85 GB 8513718**

(43) Date of publication of application:
**03.12.86 Bulletin 86/49**

(45) Publication of the grant of the patent:
**26.09.90 Bulletin 90/39**

(84) Designated Contracting States:
**CH DE FR IT LI NL**

(56) References cited:
**FR-A-2 195 000**
**GB-A-2 011 062**
**US-A-2 572 253**

(73) Proprietor: **W.R. Grace & Co.-Conn. (a
Connecticut corp.)
Grace Plaza 1114 Avenue of the Americas
New York New York 10036 (US)**

(72) Inventor: **Woodward, Alan
13 Beaconsfield Grove
Widnes Cheshire (GB)**

(74) Representative: **Ellis-Jones, Patrick George
Armine et al
J.A. KEMP & CO. 14 South Square Gray's Inn
London WC1R 5EU (GB)**

**Description**

The present invention relates to dosing a material with at least one additive, in which the amount of additive introduced into the material is dependent upon at least two parameters of the material.

It is known, for example in the field of dosing a liquid, e.g. water, with additives, to introduce the additives at a rate corresponding to the flow rate of the water through the dosing means, whereby a given proportion of the additive in the water is achieved. Such systems are disclosed in US Patents Nos. 4246969, 4324294 and 3642171. It is also known to add corrosion-inhibiting additives to boiler water in response to a measured parameter of the existing water in the boiler, for example the addition may be responsive to the solution potential, as in the engine cooling system conditioning unit disclosed in US Patent 4338959 or to the conductivity as disclosed in the US Patent 3428557 relating to a boiler water conditioning system.

However we believe that for economy of use of the additive it is preferable to reduce this precisely controlled amount of additive in inverse proportion to the temperature of the water, since the propensity of the water to oxidize its environment, for example the interior of a boiler, is directly dependent on the oxygen content of the water and it has been found that the oxygen content reduces as the water temperature increases. This temperature dependence is particularly important in the field of dosing boiler water with corrosion inhibiting agents.

Temperature responsive dosing units are known, for example from US Patent No. 3804297, but only in the context of introducing an additive in response to the quantity of a liquid to be dosed, and adding heat in response to the temperature of the mixture.

Accordingly, one aspect of the present invention provides a dosing controller including means generating an output signal for controlling a dosing pump to supply at least one liquid additive for dosing a liquid material, first means responsive to the rate of movement of the material past a sensing station, and second means responsive to the temperature or oxygen content of the material passing through the sensing station, the controller including summing means to vary said output signal for controlling the operation of the dosing pump in response to both the temperature or oxygen content, and said rate of movement of the material, the output signal being varied in direct ratio with respect to variations in the rate of movement sensed, and either in inverse ratio with respect to variations in the temperature sensed, or in direct ratio with respect to variations in the oxygen content sensed.

A second aspect of the present invention provides a method of dosing a liquid material with at least one additive comprising sensing the rate of movement of the material past a sensing station, sensing the temperature or oxygen content of the material passing said sensing station, introducing at least one additive into the material and automatically generating a control signal to control operation of said additive introduction step in response to both the measured rate of movement of the material through the sensing station and the measured temperature or oxygen content of the material through the sensing station, the rate of dosing of the material with additive being directly proportional to the rate of movement sensed, and either inversely proportional to the temperature or directly proportional to the oxygen content.

In order that the present invention may more readily be understood the following description is given, merely by way of example, with reference to the accompanying drawings in which:—

Figure 1 shows a schematic view of a dosing installation incorporating the controller in accordance with the present invention; and

Figure 2 shows a schematic view of the dosing controller used with the dosing installation of Figure 1.

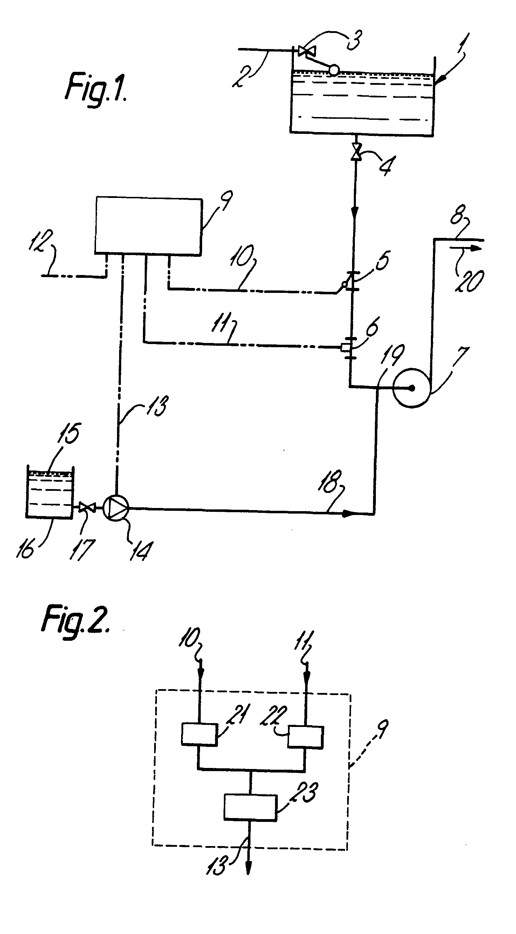

The dosing installation shown in Figure 1 comprises a supply tank 1, in this case of water intended to be fed to a boiler, the supply tank being topped-up from a line 2 by virtue of a flow-responsive shut-off valve 3.

Flow of the water from the tank 1 is throttled by a valve 4 and then passes successively through a flow rate sensor 5 and a temperature sensor 6, in this case a thermistor, on its way to a feed pump 7 which impells the water along a delivery line 8 towards a boiler (not shown).

A dosing controller 9 is connected to the flow rate sensor 5 by way of a control line 10 and to the temperature sensor 6 by virtue of a control line 11, and is energised by power from a supply conductor 12. A control signal is transmitted from the controller 9 by way of a control line 13 to a dosing pump 14 which draws additive 15 from a tank 16 by way of a flow-adjusting throttle valve 17. The delivery from the pump 14 passes along a line 18 towards a dosing location 19 where the additive from tank 16 enters the flow of water from tank 1 and passes through the pump 7 and, in the direction of arrow 20, towards the boiler (not shown). If desired, dosing location 19 can be upstream of, or at the location of, the dosing controller 9.

Figure 2 shows schematically one embodiment of the dosing controller 9 as comprising inlet line 10 to a first signal processor 21 and inlet line 11 to a second signal processor 22. The two signal processors 21 and 22 have their outputs connected to a summing means 23 which delivers to the outlet control line 13 a signal indicative of the algebraic sum of the two input signals on lines 10 and 11.

In this particular embodiment, the amount of additive required is directly proportional to the rate of flow of the water past the sensing station comprising flow sensor 5 and temperature sensor 6 and thus the output from signal processing unit 21 is directly proportional to the feed signal from the flow sensor 5.

Likewise, because the aim of the additive 15 is to reduce the likelihood of oxidation in the boiler (not shown) and because the amount of oxygen known to be dissolved in water reduces as the temperature increases, the amount of additive required will also decrease with increasing temperature and thus the output signal from the signal processing unit 22 to the summing means 23 is inversely proportional to the feed water temperature.

The particular form of controller 9, shown in Figure 2 is of the analog type and the digital output of the flow rate sensor 5 is converted to analog by a converter, not shown. A digital controller could, instead, be provide f there is an A-D converter on the input line 11 to the controller 9 and possibly also a similar converter on line 10 if an analog output flow rate sensor 5 is used.

A D-A converter is then needed somewhere in the control line 13 between the summing means 23 and the pump 14.

If desired, the summing means 23 may be a micro-processor.

In a typical boiler feed water dosing system, both the temperature or oxygen content and the flow rate of the feed water will vary according to the boiler steaming load, and to the volume of condensate being returned to the tank 1 at any time.

The variables required in order to maintain correct chemical treatment of the feed water are such that the amount of chemical additive should be increased as the feed water flow increases (thanks to the signal processing unit 21 supplied by line 10 from temperature sensor 5) and equally the amount of chemical additive should be decreased in proportion to increase in temperature, or consequent decrease in oxygen content, of the feed water (thanks to the signal processing unit 22 connected to the temperature sensor 6 by way of the control line 11).

In order to maintain optimum economy of the chemical additives, the two signal processing units 21 and 22 operate simultaneously to optimise the additive dosing rate, their signals being applied to the pump 14 by way of the summing means 23. Thus the controller provides a rate of addition of additive which is just sufficient to provide the desired effect, in this case corrosion inhibition, without adding more of the additive than is needed. The rate of addition of the additive 15 therefore varies continuously in response to variations of the flow rate and/or temperature or oxygen content of the feed water from the tank 1 to the boiler along line 8.

It will of course be appreciated that if the temperature or oxygen content remains constant, then the operation of the pump 14 is directly proportional to the flow rate of water past the sensing station at flow rate sensor 5; likewise, for a constant flow rate and a varying temperature or oxygen content, the rate of operation of the pump 14 is inversely proportional to the temperature sensed at the sensor 6 if a temperature sensor, or proportional to the oxygen content sensed at sensor 6 if an oxygen content sensor.

In the case of corrosion inhibitors in boiler feed water, the action of the additives may be to remove oxygen from the water. If the water temperature is 25°C then it will in all probability contain 8.1 ppm of dissolved oxygen, whereas at 60°C the oxygen content will be as low as 4.7 ppm. If there is no allowance made for the variation in temperature, then for a given flow rate of the water along line 8, the amount of additive with which the water is dosed when at a water temperature of 60°C will be approximately 70% in excess of what is needed given that particular water temperature.

The dosing controller in accordance with the present invention avoids this excessive use of the additive and provides a much more economic control of the boiler.

Although the preferred embodiment described above uses temperature as the second parameter, it is possible in accordance with the present invention for oxygen content to be used as the second parameter. Accordingly the second parameter can be one which has a direct proportionality ratio to the amount of additive to be dosed. The invention should therefore not be considered as restricted to the addition of corrosion inhibitors in boiler feed water systems. Furthermore, although the present invention has been exemplified in terms of addition of a liquid additive to a liquid material, in this case boiler feed water, it is of course possible for materials other than liquid to be dosed using the dosing controller in accordance with the present invention, and for the additive itself to be of other than liquid form.

The dosing pump 14 may be any form of metering pump, and is preferably an impulsing pump which repetitively injects a known dose of the additive into the feed water line, in response to the signals from the dosing controller 9. For example, it is envisaged that with the impulsing type of pump one dose may be injected every 4 or 5 seconds, but it will of course be appreciated that the time interval between successive doses of the additive will be varied in dependence on the sensed temperature and flow rate. Thus, in order to provide a quantity of additive injected which is inversely proportional to temperature but directly proportional to flow rate, the time interval between doses will be inversely proportional to flow rate but directly proportional to temperature, provided the dose injected each time is constant.

**Claims**

1. A dosing controller (9) including means generating an output signal for controlling a dosing pump (14) to supply at least one liquid additive for dosing a liquid material, characterised by comprising first means (5) responsive to the rate of movement of the material past a sensing station, and second means (6) responsive to the temperature or oxygen content of the material passing through the sensing station, the controller including summing means (23) to vary said output signal for controlling the operation of the dosing pump in response to both the temperature or oxygen content and said rate of movement of the material, the output signal being varied in direct ratio with respect to variations in the rate of movement sensed, and either in inverse ratio with respect to variations in the temperature sensed, or in direct ratio to variations in the oxygen content sensed.

2. A dosing controller according to claim 1, wherein the means for sensing the rate of movement of the material past the sensing station comprises a flow sensor responsive to the flow of a liquid material therepast.

3. A dosing controller according to claim 1 or 2, wherein each of the signal processing units and the summing means handles analog signals.

4. A dosing controller according to claim 1 or 2, wherein the summing means and each of said first means and said second means handle digital signals and an analog-digital converter is included in the feed line to each of said first means and said second means and a digital-analog converter is provided for transforming the output signal from the summing means.

5. A method of dosing a liquid material with at least one additive, characterised by sensing (by means 5) the rate of movement of the material past a sensing station, sensing (by means 6) the temperature or oxygen content of the material passing said sensing station, introducing at least one additive into the material (by means 14), and automatically generating a control signal (by means 23) to control operation of said additive introduction step in response to both the measured rate of movement of the material through the sensing station and the measured temperature or oxygen content of the material through the sensing station, the rate of dosing of the material with additive being directly proportional to the rate of movement sensed, and either inversely proportional to the temperature or directly proportional to the oxygen content.

6. A method according to claim 5, wherein the material is water.

7. A method according to claim 6, wherein the material to be dosed is boiler feed water and the additive is a corrosion inhibitor liquid which is added in direct proportion to the flow rate of the boiler feed water past the sensing station and in inverse proportion to the temperature, or in proportion to the oxygen content, of the feed water flowing past the sensing station.

8. A method according to any one of claims 5 to 7, wherein the said at least one additive is introduced into the material as a succession of distinct doses of a given size, the time between successive doses being inversely proportional to the desired rate of introduction of the additive.

**Patentansprüche**

1. Dosierungsvorrichtung (9) mit Mitteln, die ein Ausgabesignal zur Steuerung einer Dosier-Pumpe (14) erzeugen, um einem flüssigen Material wenigstens ein flüssiges Additiv zuzugeben, gekennzeichnet durch eine erste Einrichtung (5), die die Durchflußgeschwindigkeit des Materials durch eine Meßeinheit registriert, und durch eine zweite Einheit (6), die die Temperatur oder den Sauerstoffgehalt des Materials beim Durchgang durch die Meßeinheit registriert, wobei die Vorrichtung eine Summier-Einrichtung (23) enthält, die das Ausgabesignal zur Steuerung der Dosier-Pumpe in Abhängigkeit von sowohl der Temperatur oder dem Sauerstoffgehalt als auch der Durchflußgeschwindigkeit variiert, wobei das Ausgabesignal proportional zu Änderungen der gemessenen Durchflußgeschwindigkeit und entweder umgekehrt proportional zu Änderungen der gemessenen Temperatur oder proportional zu Änderungen des gemessenen Sauerstoffgehalts variiert wird.

2. Vorrichtung nach Anspruch 1, wobei die Einrichtung, die die Durchflußgeschwindigkeit durch die Meßeinheit registriert, einen Strömungssensor aufweist, der die Strömung eines flüssigen Materials durch die Meßeinheit nachweist.

3. Vorrichtung nach Anspruch 1 oder 2, wobei die signalverarbeitenden Einrichtungen und die Summier-Einrichtung mit Analogsignalen arbeiten.

4. Vorrichtung nach Anspruch 1 oder 2, wobei die Summier-Einrichtung und besagte erste und zweite Einrichtungen mit Digitalsignalen arbeiten und jeweils ein Analog-Digital-Wandler in der Zuleitung zu der ersten und zweiten Einrichtung enthalten und ein Digital-Analog-Wandler zur Umwandlung des Ausgabesignals der Summier-Einrichtung vorhanden ist.

5. Verfahren zum Dosieren wenigstens eines Additivs für ein flüssiges Material, gekennzeichnet durch Nachweisen (durch Einrichtung (5)) der Durchflußgeschwindigkeit des Materials durch eine Meßeinheit, durch Nachweisen (durch Einrichtung (6)) der Temperatur oder des Sauerstoffgehalts des Materials beim Passieren der Meßeinheit, Zugabe wenigstens eines Additivs in das Material (durch Einrichtung (14)), und automatische Erzeugung eines Steuersignals (durch Einrichtung (23)) zur Steuerung der Zugabe wenigstens eines Additivs in Abhängigkeit von der gemessenen Durchflußgeschwindigkeit des Materials durch die Meßeinheit und der gemessenen Temperatur oder des Sauerstoffgehalts des Materials in der Meßeinheit, wobei die Dosierungsrate des Additivs proportional zur gemessenen Durchflußgeschwindigkeit und entweder umgekehrt proportional zu der Temperatur oder proportional zum Sauerstoffgehalt ist.

6. Verfahren nach Anspruch 5, wobei das Material Wasser ist.

7. Verfahren nach Anspruch 6, wobei das Material Speisewasser für einen Boiler und das Additiv eine korrosionshemmende Flüssigkeit ist, dessen Dosierung proportional zum Durchfluß des Boiler-Speisewassers durch die Meßeinheit und entweder umgekehrt proportional zur Temperatur oder proportional zum Sauerstoffgehalt des Speisewassers beim Durchgang durch die Meßeinheit ist.

8. Verfahren nach jedem der Ansprüche 5 bis 7, wobei das wenigstens eine Additiv zum Material als Folge diskreter Mengeneinheiten vorgegebener Größe zugegeben wird, und die Zeit zwischen aufeinanderfolgenden Mengeneinheiten umgekehrt proportional zu der gewünschten Zugaberate des Additivs ist.

**Revendications**

1. Contrôleur de dosage (9) incluant un moyen générant un signal de sortie pour contrôler une pompe de dosage (14) dans l'alimentation d'au moins un additif liquide pour doser un matériau liquide, caractérisé en ce qu'il comprend un premier moyen (5) sensible à la vitesse de mouvement du matériau passé une position de détection, et un second moyen (6) sensible à la température ou à la teneur en oxygène du matériau passant par la position de détection, le contrôleur incluant un moyen additionneur (23) pour faire varier ledit signal de sortie pour contrôler le fonctionnement de la pompe de dosage, en réponse à la température ou à la teneur en oxygène, et à ladite vitesse du mouvement du matériau, le signal de sortie variant en proportion directe des variations dans la vitesse détectée du mouvement, et, ou bien en proportion inverse des variations de la température détectée, ou bien en proportion directe des variations de la teneur en oxygène détectée.

2. Contrôleur de dosage selon la revendication 1, dans lequel le moyen pour mesurer la vitesse du mouvement du matériau passé la position de détection comprend un capteur de flux sensible au flux d'un materiau liquide passé cette position.

3. Contrôleur de dosage selon la revendication 1 ou 2, dans lequel chacune des unités de traitement du signal et le moyen additionneur traitent des signaux analogiques.

4. Contrôleur de dosage selon la revendication 1 ou 2, dans lequel le moyen additionneur et chacun desdits premier et second moyens traitent des signaux digitaux et un convertisseur analogique-digital est inclus sur la ligne d'alimentation vers chacun desdits premier et second moyens et un convertisseur digital-analogique est prévu pour transformer le signal de sortie provenant du moyen additionneur.

5. Méthode pour doser un matériau liquide avec au moins un additif, caractérisée en ce qu'on mesure (grâce au moyen 5) la vitesse de mouvement du matériau passé une position de mesure, on mesure (grâce au moyen 6) la température ou la teneur en oxygène du matériau passant ladite position de mesure, on introduit au moins un additif dans le matériau (grâce au moyen 14), et on génère automatiquement un signal de contrôle (grâce au moyen 23) pour contrôler le fonctionnement du pas d'introduction dudit additif en réponse à la foids à la vitesse mesurée du mouvement du matériau à travers la position de détection et à la température mesurée ou à la teneur en oxygène du matériau à la position de détection, la vitesse de dosage du matériau avec l'additif étant directement proportionnelle à la vitesse du mouvement détecté, et, soit inversement proportionnelle à la température soit directement proportionnelle à la teneur en oxygène.

6. Méthode selon la revendication 5, dans laquelle le matériau est de l'eau.

7. Méthode selon la revendication 6, dans laquelle le matériau à doser est de l'eau d'alimentation d'une chaudière et l'additif est un liquide inhibiteur de corrosion qui est ajouté en proportion de la vitesse du flux de l'eau d'alimentation de la chaudière passée la position de mesure et en proportion inverse de la température, ou en proportion de la teneur en oxygène, de l'eau d'alimentation s'écoulant passée la position de détection.

8. Méthode selon l'une quelconque des revendications 5 à 7, dans laquelle au moins un additif est introduit dans le matériau suivant une succession de doses distinctes d'une importance donnée, le temps entre les doses successives étant inversement proportionnel à la vitesse désirée d'introduction de l'additif.

Fig.1.

Fig.2.